# EUROPÄISCHE PATENTSCHRIFT

(11) **EP 0 920 108 B1**
(45) Veröffentlichungstag und Bekanntmachung des Hinweises auf die Patenterteilung: **04.10.2006**
(21) Anmeldenummer: 98122513.9
(22) Anmeldetag: 27.11.1998
(51) Int. Cl.: H02K 5/22, H01R 9/24, F25B 31/02

(54) **Kältemittelkompressor**
Refrigerant compressor
Compresseur frigorifique

(30) Priorität: 27.11.1997 DE 19752632
(43) Veröffentlichungstag der Anmeldung: 02.06.1999
(73) Patentinhaber: Bitzer Kühlmaschinenbau GmbH, 71065 Sindelfingen (DE)
(72) Erfinder: Pollrich, Volker, 04435 Schkeuditz (DE); Barowsky, Helmut, 16562 Bergfelde (DE)
(74) Vertreter: Hoeger, Stellrecht & Partner Patentanwälte

(56) Entgegenhaltungen:
- WO-A-97/37421
- DE-A- 4 309 899
- DE-A- 4 342 761
- DE-C- 4 435 510
- US-A- 5 408 154

## Beschreibung

Die Erfindung betrifft einen Kältemittelkompressor, umfassend ein Kompressorgehäuse, in welchem eine kältemittelkomprimierende Einheit und ein diese antreibender Elektromotor angeordnet sind, sowie einen an dem Gehäuse sitzenden Klemmenkasten.

Derartige Kältemittelkompressoren sind aus dem Stand der Technik bekannt.

Bei solchen Lösungen ist ein lediglich ein Außengehäuse bildender Klemmenkasten vorgesehen und in dem Klemmenkasten sind weitere zusätzliche Elemente zur Herstellung der Wicklungsverschaltung und der elektrischen Anschlüsse vorgesehen.

DE4309899A1 offenbart einen Kolbenkompressor, umfassend ein Kompressorgehäuse, in welchem eine ein Arbeits Fluid komprimierende Einheit (14) und ein diese antreibender Elektromotor angeordnet sind, sowie einen an dem Kompressorgehäuse (12) sitzenden Klemmenkasten, wobei der Klemmenkasten (20) ein einstückig an diesen angeformtes und in einem Innenraum (70) desselben angeordnetes Klemmbrett (30) aufweist.

Der Erfindung liegt die Aufgabe zugrunde, inen Kältemittel bei einer Abkühlung des Kompressorgehäuses das Eindringen von Feuchtigkeit in dem Klemmenkasten zu vermeiden.

Diese Aufgabe wird erfindungsgemäß durch die Merkmale des unabhängigen Anspruchs 1 gelöst. Bevorzugte Ausgestaltungen der Erfindung sind in der abhängigen Ansprüchen definiert.

Der Vorteil der erfindungsgemäßen Lösung ist somit darin zu sehen, daß das Klemmbrett aufgrund der Tatsache, daß es einstückig an den Klemmenkasten angeformt ist, bereits den

Vorteil hat, daß zusätzlich zum Klemmenkasten kein weiteres Teil, nämlich das Klemmbrett vorgehalten werden muß, sondern daß das Klemmbrett bereits mit Vorhalten des Klemmenkastens automatisch vorgehalten ist.

Ferner hat die erfindungsgemäße Lösung den großen Vorteil, daß mit einem derartigen Klemmenkasten die elektrische Verschaltung einfacher herstellbar ist, da mit dem Aufsetzen des Klemmenkastens bereits auch das Klemmbrett an der für dieses vorgesehenen zutreffenden Stelle montiert ist.

Erfindungsgemäß ist unter einem Klemmbrett ein Träger für elektrische Anschlußklemmen zu verstehen, wobei diese Anschlußklemmen vorzugsweise zur Verschaltung von Wicklungsanzapfungen des Elektromotors dienen. Vorzugsweise sind dazu sechs Anschlußklemmen vorgesehen.

Das einstückig an den Klemmenkasten angeformte Klemmbrett kann beispielsweise im Anschluß an eine Seitenwand desselben angeordnet sein.

Besonders günstig zum Vorsehen der einzelnen Anschlüsse ist es jedoch, wenn das Klemmbrett sich in einem mittigen Bereich des Klemmenkastens zwischen zwei Seitenwänden desselben erstreckt, so daß beiderseits des Klemmbretts noch Raum für das Führen von Anschlußleitungen vorhanden ist

Vorzugsweise sind die Seitenwände Längsseitenwände des Klemmenkastens, so daß sich das Klemmbrett parallel zu den Querseitenwänden erstreckt.

Um zu den an dem Klemmbrett angeordneten Anschlußklemmen einen leichten Zugang zur Führung von Anschlußleitungen zu haben, ist zweckmäßigerweise vorgesehen, daß das Klemmbrett im Abstand über einen Boden des Klemmenkastens angeordnet ist.

Eine besonders günstige Lösung sieht vor, daß ein Boden des Klemmenkastens mit mindestens einem seitlich des Klemmbretts liegenden Durchbruch zur Durchführung von elektrischen Leitungen versehen ist. Besonders günstig ist es, wenn der Boden beiderseits des Klemmbretts insbesondere zwischen diesem und den parallel zu diesem verlaufenden Seitenwänden, mit Durchbrüchen versehen ist.

Um insbesondere bei einem Klemmbrett, auf dessen Oberseite und Unterseite Anschlußmöglichkeiten vorgesehen sind, die Anschlußmöglichkeiten an der Unterseite optimal nutzen zu können, ist vorzugsweise vorgesehen, daß ein Boden des Klemmenkastens im Bereich des Klemmbretts mit einer die Unterseite des Klemmbretts zugänglich machenden Ausnehmung versehen ist.

Um sowohl dem Klemmenkasten als auch dem Klemmbrett eine möglichst große Stabilität zu verleihen, ist vorzugsweise vorgesehen, daß im Anschluß an das Klemmbrett eine quer zum Klemmbrett und quer zum Boden des Klemmenkastens verlaufende Stützwand vorgesehen ist.

Vorzugsweise erstreckt sich diese Stützwand zwischen dem Boden und dem Klemmbrett und versteift somit beide relativ zueinander.

Die Stützwand könnte prinzipiell an beliebiger Stelle des Klemmbretts vorgesehen sein. Um die Anschlußmöglichkeiten für das Klemmbrett nicht zu behindern ist vorzugsweise die Stützwand auf einer Seite des Klemmbretts angeordnet.

Das Klemmbrett kann beispielsweise so ausgebildet sein, daß nur auf dessen Oberseite, Leitungen an die einzelnen Anschlußklemmen anschließbar sind.

Ein besonders vorteilhaftes Ausführungsbeispiel sieht jedoch vor, daß das Klemmbrett so ausgebildet ist, daß Leitungen an dessen Oberseite und dessen Unterseite anschließbar sind.

Das Klemmbrett könnte beispielsweise so ausgebildet sein, daß es auf der Oberseite und der Unterseite jeweils getrennte Anschlußklemmen aufweist. Besonders günstig lassen sich jedoch die für das Betreiben eines Elektromotors erforderlichen Anschlußvarianten dann realisieren, wenn das Klemmbrett mit Anschlußklemmen für die elektrischen Anschlüsse versehen ist, welche durch das Klemmbrett hindurchgeführt sind und an welchen sowohl auf einer Oberseite als auch auf einer Unterseite Leitungen anschließbar sind.

Derartige Anschlußklemmen des Klemmbretts können in unterschiedlicher Art und Weise ausgebildet sein.

Eine besonders vorteilhafte Lösung sieht vor, daß das Klemmbrett mit schraubbaren Anschlußklemmen versehen ist, da mit diesen besonders sichere Anschlüsse herstellbar sind.

Eine besonders bevorzugte Lösung sieht vor, daß die Anschlußklemmen als Stifte ausgebildet sind.

Um zwischen den einzelnen Anschlußklemmen möglichst große Strecken für Kriechströme zu erhalten, ist vorzugsweise vorgesehen, daß das Klemmbrett zwischen einzelnen einander benachbarten Anschlußklemmen mit wegverlängernden Elementen versehen ist. Derartige wegverlängernde Elemente können sowohl Vertiefungen aber auch Erhebungen sein, die auf der Oberfläche des Klemmbretts vorgesehen sind.

Eine besonders günstige Lösung sieht vor, daß die wegverlängernden Elemente als einstückig an das Klemmbrett angeformte Elemente ausgebildet sind.

Eine weitere vorteilhafte erfindungsgemäße Lösung sieht vor, daß der Klemmenkasten mit einer einstückig eingeformten Klemmenleiste versehen ist, so daß auch zum Vorsehen weiterer Anschlüsse, beispielsweise zusätzlicher Anschlüsse zum Klemmbrett, kein zusätzliches Element in den Klemmenkasten eingebaut werden muß, sondern ebenfalls bereits die integral als Bestandteil des Klemmenkastens ausgebildete Klemmenleiste einsetzbar ist.

Vorzugsweise verläuft diese Klemmenleiste parallel zu einer Längsseitenwand des Klemmenkastens und ist insbesondere im Anschluß an diese an den Klemmenkasten angeformt.

Um den erfindungsgemäßen Klemmenkasten besonders einfach auf dem Kompressorgehäuse montieren zu können, ist nach Anspruch 1 eine Dichtung zwischen einem Boden des Klemmenkastens und dem Kompressorgehäuse als fest mit dem Klemmenkasten verbundene umlaufende Dichtung ausgebildet. Damit ist bereits vor Montage des Klemmenkasten dieser zusammen mit der Dichtung als Einheit herstellbar, so daß bei der Montage des Klemmenkastens auf ein Vorhandensein und ein korrektes Einlegen der Dichtung nicht mehr geachtet werden muß.

Eine besonders zweckmäßige Lösung dieser Dichtung sieht dabei vor, daß diese durch eine in eine Nut im Boden des Klemmenkastens eingebrachte Dichtungsmasse, vorzugsweise eine geschäumte Masse ausgebildet ist.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine schematische Ansicht eines erfindungsgemäßen Kältemittelkompressors;
- Fig. 2: eine Draufsicht auf einen Klemmenkasten gemäß der erfindungsgemäßen Lösung mit teilweise aufgebrochenem Deckel;
- Fig. 3: eine Seitenansicht des Klemmenkastens in Richtung des Pfeils A in Fig. 1 mit teilweise aufgebrochener Seitenwand und abgehobenem Deckel und
- Fig. 4: eine Ansicht des Klemmenkastens von unten in Richtung des Pfeils B in Fig. 3.

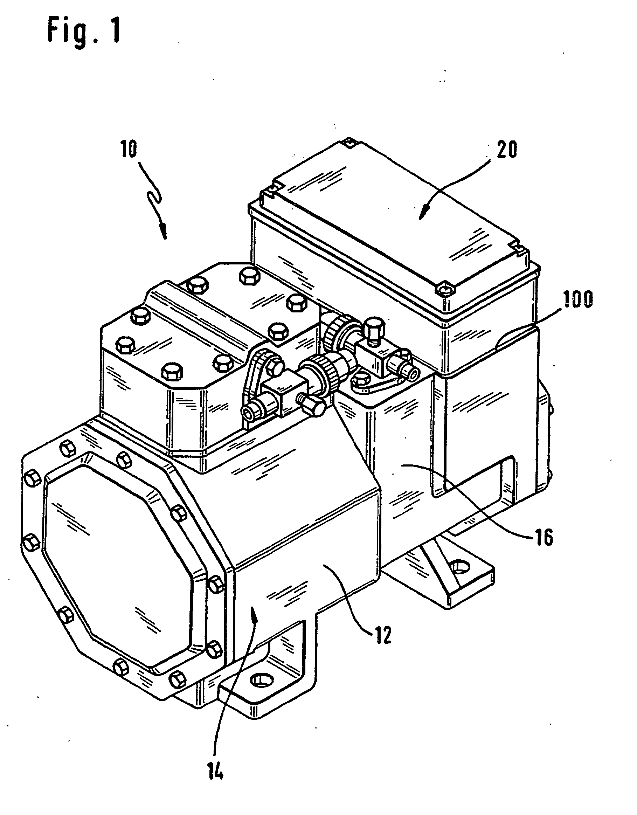

Ein in Fig. 1 dargestellter und als Ganzes mit 10 bezeichneter Kältemittelkompressor umfaßt ein Kompressorgehäuse 12, in welchem eine kältekomprimierende Einheit 14 angeordnet ist, die außerdem über einen ebenfalls im Kompressorgehäuse 12 angeordneten zeichnerisch nicht sichtbaren Elektromotor antreibbar ist.

Zum Anschluß des Elektromotors ist auf einem den Elektromotor 14 umgebenden Abschnitt 16 des Kompressorgehäuses 12 ein Klemmenkasten 20 vorgesehen.

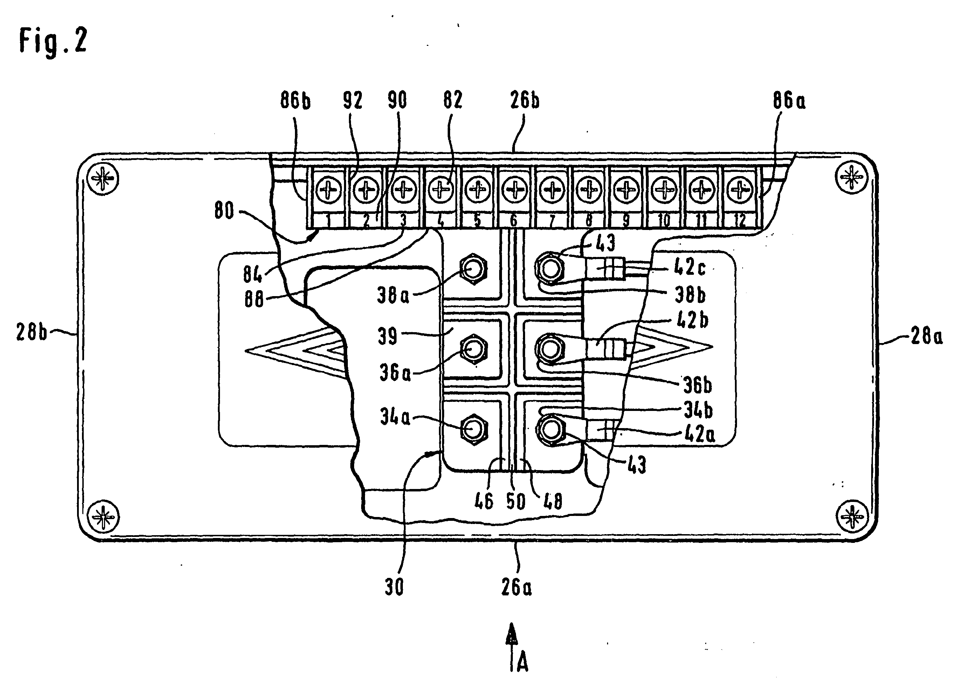

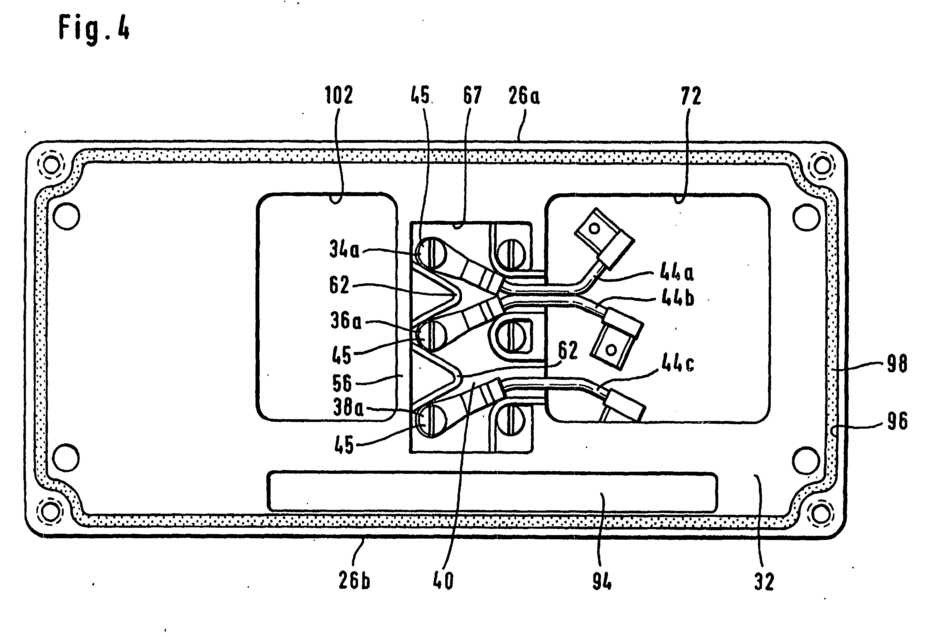

Dieser Klemmenkasten 20 umfaßt, wie in Fig. 2 bis 4 dargestellt, ein Gehäuseunterteil 22, dessen obere Gehäuseöffnung 23 mit einem Deckel 24 verschließbar ist.

Das Gehäuseunterteil 22 weist zwei Längsseitenwände 26a, b sowie zwei Querseitenwände 28a, b auf, die jeweils parallel zueinander verlaufen.

Zwischen den Seitenwänden erstreckt sich, wie insbesondere in Fig. 2 dargestellt, ein als Ganzes mit 30 bezeichnetes Klemmbrett, welches einstückig an die Längsseitenwände 26a, b angeformt ist und in einem Abstand über einem Boden 32 sowie ungefähr parallel zu diesen zwischen den Längsseitenwänden 26a, b verläuft.

Das Klemmbrett 30 trägt drei Paare von als elektrische Anschlußklemmen dienenden Gewindehülsen 34a, b, 36a, b, 38a,b die in Richtung der Erstreckung der Querseitenwände 28a, b nebeneinanderliegend angeordnet sind, wobei bei jedem der Paare 34a, b, 36a, b und 38a, b die beiden einzelnen Gewindehülsen 34a, 34b, 36a, 36b und 38a, 38b in Richtung der Erstreckung der Längsseitenwände 28a, b voneinander beabstandet sind.

Vorzugsweise sind die Abstände zwischen den Gewindehülsen innerhalb eines Paares 34a, 34b, 36a, 36b und 38a, 38b sowie die Abstände zwischen den einzelnen aufeinanderfolgenden Paaren 34a, b 36a, b und 38a, b in Richtung der Querseitenwände 28a, b gesehen ungefähr gleich groß.

Vorzugsweise sind die Gewindehülsen 34b, 36b und 38b mit den einem ersten Satz von Wicklungsanzapfungen darstellenden Leitungen 42a, 42b und 42c verbunden, während die Gewindehülsen 34a, 36a, 38a mit den einen zweiten Satz von Wicklungsanzapfungen darstellenden Leitungen 44a, 44b, 44c verbunden sind.

Besonders günstig für die möglichen Anschlußvarianten ist es dabei, wenn der erste Satz von Leitungen 42a, 42b, 42c über eine Oberseite 39 des Klemmbretts 30 zu den Gewindehülsen 34b, 36b und 38b geführt ist und eine elektrische Verbindung mit diesen mittels über die Oberseite 39 überstehenden und in die Gewindehülsen 34, 36b und 38b eingeschraubte Gewindestifte 41 sowie auf diesen sitzende Mutter 43 erfolgt.

Zweckmäßigerweise ist außerdem der zweite Satz von elektrischen Leitungen 44a, 44b, 44c über eine Unterseite 40 des Klemmbretts 30 zu den Gewindehülsen 34a, 36a, 38a geführt und über in die Gewindehülsen 34a, 36a, 38a eingeschraubte Kopfschrauben 45 elektrisch mit diesen verbunden.

Eine Festlegung der Verschaltung der Wicklungsanzapfungen ist dann über zusätzlich mit den Gewindestiften 41 verbindbaren Brücken möglich.

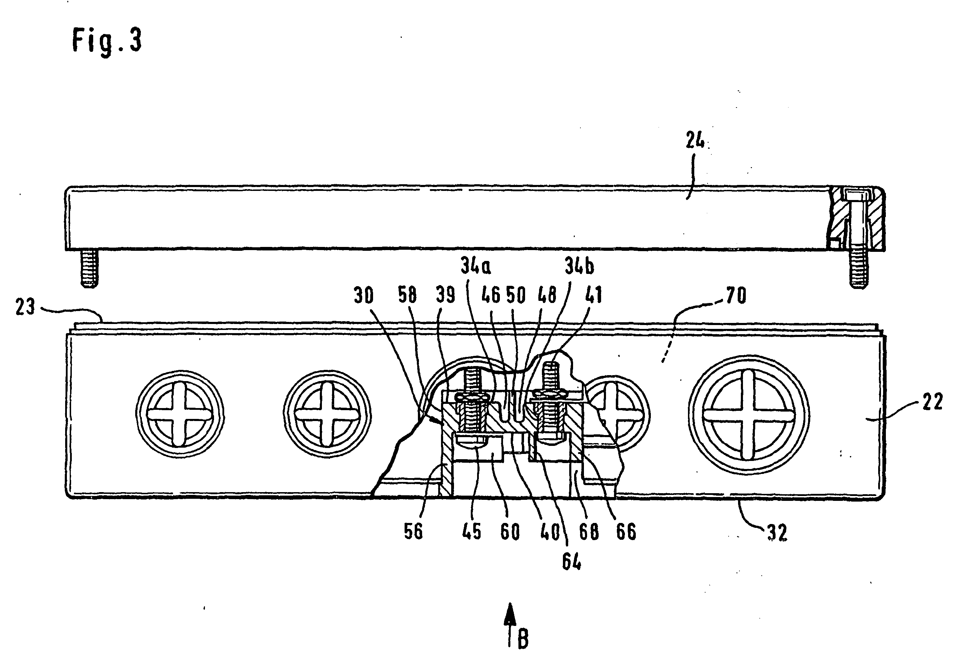

Um ferner möglichst große Kriechstromstrecken zwischen den einzelnen Gewindehülsen 34a, b, 36a, b und 38a, b zu erreichen, sind jeweils zwischen einander benachbarten Gewindehülsen in der Oberseite 39 des Klemmbretts 30 zwei Nuten 46 und 48 vorgesehen, welche gegenüber der Oberseite 39 eine Vertiefung darstellen, und zwischen den beiden Nuten 46 und 48 ist ein sich über die Oberseite 39 hinaus erstreckender Steg 50 vorgesehen, so daß die beiderseits des Stegs 50 liegenden Nuten 46 und 48 zusammen mit dem Steg 50 eine verlängerte Kriechstromstrecke zwischen jeweils benachbarten Gewindehülsen, beispielsweise den Gewindehülsen 34a und 34b bilden, wie in Fig. 2 und 3 dargestellt.

Um auch zwischen den Kopfschrauben 45 auf der Unterseite 40 möglichst große Kriechstromstrecken zu erhalten, erhebt sich über die Unterseite 40 ein jeweils in Richtung parallel zu der Unterseite 40 V-förmig ausgebildeter Steg 60 zwischen aufeinanderfolgenden Gewindehülsen 34a, 36a sowie 36a, 38a. Die V-förmigen Stege 60 liegen dabei mit ihrer offenen Seite an einer Stützwand 56 an, welche sich auf einer Seite 58 des Klemmenbretts 30 zwischen dem Boden 32 und dem Klemmbrett 30 sowie zwischen den Längsseitenwänden 26a, b erstreckt und vorzugsweise parallel zu der Querseitenwand 28b verläuft. Die Stützwand 56 ist dabei vorzugsweise ebenfalls einstückig an die Längsseitenwände 26a, b, den Boden 32 und das Klemmbrett 30 angeformt.

Ausgehend von dieser Stützwand 56 weisen die V-förmigen Stege 60 dann mit ihren Spitzen 62 in Richtung von der Stützwand 56 weg.

Ferner sind vorzugsweise untere Enden der Anschlußhülsen 34b, 36b und 38b noch von Stegen 64 umschlossen, wobei die Stege 64 sich ebenfalls über die Unterseite 40 in Richtung des Bodens 32 erstrecken. Um die Unterseite 40 des Klemmbretts 30 gut zugänglich zu machen, ist der Boden 32 im Bereich des Klemmbretts 30 mit einer Zugangsöffnung 67 versehen, welche ungefähr eine der Ausdehnung des Klemmbretts 30 entsprechenden Ausdehnung aufweist.

Zwischen einer der Seite 58 gegenüberliegenden Seite 66 des Klemmbretts 30 und dem Boden 32 ist ein Durchbruch 68 vorgesehen, durch welchen die Leitungen 44a bis c von den Gewindehülsen 34a, 36a und 38a über die Unterseite 40 des Klemmbretts 30 in einen Innenraum 70 des Klemmenkastens 20 einführbar sind.

Zum Anschluß der Leitungen 42a, 42b und 42c sowie 44a, 44b und 44c ist der Boden 32 in einem Bereich zwischen dem Klemmbrett 30 und der Querseitenwand 28a mit einem Bodendurchbruch 72 versehen, über welchen von dem Kompressorgehäuse 12 ausgehend sich erstreckende zeichnerisch nicht dargestellte Anschlußfahnen in das Innere 70 des Klemmenkastens 20 hineinragen, wobei auf diese Anschlußfahnen die Leitungen 42a, 42b und 42c sowie 44a, 44b und 44c aufsteckbar sind.

Zum Anschluß weiterer Leitungen ist in dem als Ganzes mit 20 bezeichneten Klemmenkasten eine als Ganzes mit 80 bezeichnete Klemmenleiste vorgesehen, welche eine Reihe von Klemmenelementen 82 aufweist. Auch die Klemmenleiste 80 als Träger der Klemmenelemente 82 ist einstückig an die Längsseitenwand 26b angeformt und liegt zwischen dieser und dem Klemmbrett 30, welches sich an die einstückig an das Gehäuse angeformte Klemmleiste 80 anschließt. Die Klemmleiste 80 weist dabei einen sich über den Boden 32 mit einer parallel zur Längsseitenwand 26b verlaufenden Klemmleistenwand 84 sowie sich parallel zu den Querseitenwänden 28a, b erstreckenden Klemmleistenquerwänden 86a, b versehenen Klemmleistenkörper 88 auf, welcher noch einen die Klemmleistenwände 84 und 86 abschließenden Klemmleistendeckel 90 trägt, auf welchem die einzelnen Klemmenelemente 82 sitzen.

Der gesamte Klemmleistenkörper 88 mit dem Klemmleistendeckel 90 und den Klemmleistenwänden 84 und 86 ist einstückig an das Gehäuseunterteil 22 so angeformt, daß sich ausgehend vom Boden 32 zwischen der Längsseitenwand 26b und der Klemmleistenwand 84 sowie den Klemmleistenquerwänden 86a und 86b sowie dem Klemmleistendeckel 90 ein Hohlraum 94 ausbildet.

Zur Ausbildung eines dichten Abschlusses zwischen dem Kompressorgehäuse 12 und dem Gehäuseunterteil 22 ist im Boden 32 desselben eine Nut 96 vorgesehen, in welche eine geschäumte Dichtung 98 eingebracht ist, welche nahe den Längsseitenwänden 26a, b sowie den Querseitenwänden 28a, b um sämtliche Durchbrüche im Boden 32 und diese umschließend herumverläuft und auf einer Auflagefläche 100 des Kompressorgehäuses 12 anliegend einen dichten Abschluß zwischen dem Boden 32 des Gehäuseunterteils 22 und dem Kompressorgehäuse 12 bildet.

## Patentansprüche

1. Kältemittelkompressor, umfassend ein Kompressorgehäuse (12), in welchem eine kältemittelkomprimierende Einheit (14) und ein diese antreibender Elektromotor angeordnet sind, sowie einen an dem Kompressorgehäuse (12) sitzenden Klemmenkasten, wobei der Klemmenkasten (20) ein einstückig an diesen angeformtes und in einem Innenraum (70) desselben angeordnetes Klemmbrett (30) aufweist, und wobei ein Boden (32) des Klemmenkastens (20) eine fest mit dem Klemmenkasten (20) verbundene und um mindestens einen Durchbruch (72, 100) in dem Boden (32) umlaufende Dichtung (98) aufweist, welche einen dichten Abschluss zwischen dem Boden (32) und dem Kompressorgehäuse (23) bildet.

2. Kältemittelkompressor nach Anspruch 1, **dadurch gekennzeichnet, dass** das Klemmbrett (30) sich in einem mittigen Bereich des Klemmenkastens (20) zwischen zwei Seitenwänden (26a, b) erstreckt.

3. Kältemittelkompressor nach Anspruch 2, **dadurch gekennzeichnet, dass** sich das Klemmbrett (30) zwischen Längsseitenwänden (26a, b) und parallel zu Querseitenwänden (28a, b) erstreckt.

4. Kältemittelkompressor nach einem der voranstehenden Ansprüche, **dadurch gekennzeichnet, dass** das Klemmbrett (30) im Abstand über einem Boden (32) des Klemmenkastens (20) angeordnet ist.

5. Kältemittelkompressor nach einem der voranstehenden Ansprüche, **dadurch gekennzeichnet, dass** ein Boden (32) des Klemmenkastens (20) mit mindestens einem seitlich des Klemmbretts (30) liegenden Durchbruch (72, 100) versehen ist.

6. Kältemittelkompressor nach Anspruch 5, **dadurch gekennzeichnet, dass** der Klemmenkasten (20) beiderseits des Klemmbretts (30) mit Durchbrüchen (72, 102) versehen ist.

7. Kältemittelkompressor nach einem der voranstehenden Ansprüche, **dadurch gekennzeichnet, dass** ein Boden (32) des Klemmenkastens (20) im Bereich des Klemmbretts (30) mit einer die Unterseite (40) des Klemmbretts (30) zugänglich machenden Ausnehmung (66) versehen ist.

8. Kältemittelkompressor nach einem der voranstehenden Ansprüche, **dadurch gekennzeichnet, dass** im Anschluß an das Klemmbrett (30) eine quer zum Klemmbrett (30) und quer zum Boden (32) des Klemmenkastens (20) verlaufende Stützwand (56) vorgesehen ist.

9. Kältemittelkompressor nach Anspruch 8, **dadurch gekennzeichnet, dass** die Stützwand (56) auf einer Seite des Klemmbretts (30) angeordnet ist.

10. Kältemittelkompressor nach einem der voranstehenden Ansprüche, **dadurch gekennzeichnet, dass** das Klemmbrett so ausgebildet ist, dass Leitungen (42, 44) an dessen Oberseite (39) und dessen Unterseite (40) an Anschlußklemmen des Klemmbretts anschließbar sind.

11. Kältemittelkompressor nach Anspruch 10, **dadurch gekennzeichnet, dass** das Klemmbrett (30) mit Anschlußklemmen (34, 36, 38) versehen ist, welche durch das Klemmbrett (30) hindurchgeführt sind.

12. Kältemittelkompressor nach Anspruch 11, **dadurch gekennzeichnet, dass** das Klemmbrett (30) mit schraubbaren Anschlußklemmen (34, 36, 38) versehen ist.

13. Kältemittelkompressor nach einem der voranstehenden Ansprüche, **dadurch gekennzeichnet, dass** das Klemmbrett (30) zwischen einzelnen einander benachbarten Anschlußklemmen (34, 36, 38) mit wegverlängernden Elementen (46, 48, 50) versehen ist.

14. Kältemittelkompressor nach Anspruch 13, **dadurch gekennzeichnet, dass** die wegverlängernden Elemente (46, 48, 50) als einstückig an das Klemmbrett (30) angeformte Elemente ausgebildet sind.

15. Kältemittelkompressor nach einem der voranstehenden Ansprüche, **dadurch gekennzeichnet, dass** der Klemmenkasten (20) mit einer einstückig in diesen eingeformten Klemmenleiste (80) versehen ist.

16. Kältemittelkompressor nach einem der voranstehenden Ansprüche, **dadurch gekennzeichnet, dass** die Dichtung (98) durch eine in eine Nut (96) im Boden (32) des Klemmenkastens (20) eingebrachte Dichtungsmasse ausgebildet ist.

## Claims

1. A refrigerant compressor comprising a compressor housing (12) in which there are arranged a refrigerant-compressing unit (14) and an electric motor for the operation thereof, and also a terminal box that is seated on the compressor housing (12), wherein the terminal box (20) comprises a terminal board (30) which is formed in one piece therewith and is arranged in an interior space (70) thereof, and wherein
a base (32) of the terminal box (20) comprises a seal (98) which is firmly connected to the terminal box (20), surrounds at least one break-through (72, 100) in the base (32), and forms a sealed termination between the base (32) and the compressor housing (23).

2. A refrigerant compressor in accordance with Claim 1, **characterised in that** the terminal board (30) extends in a central region of the terminal box (20) between two side walls (26a, b).

3. A refrigerant compressor in accordance with Claim 2, **characterised in that** the terminal board (30) extends between long side walls (26a, b) and parallel to transverse side walls (28a, b).

4. A refrigerant compressor in accordance with any of the preceding Claims, **characterised in that** the terminal board (30) is arranged at a spacing above a base (32) of the terminal box (20)

5. A refrigerant compressor in accordance with any of the preceding Claims, **characterised in that** a base (32) of the terminal box (20) is provided with at least one break-through (72, 100) located laterally of the terminal board (30).

6. A refrigerant compressor in accordance with Claim 5, **characterised in that** the terminal box (20) is provided with break-throughs (72, 102) on both sides of the terminal board (30).

7. A refrigerant compressor in accordance with any of the preceding Claims, **characterised in that** a base (32) of the terminal box (20) is provided in the vicinity of the terminal board (30) with a recess (66) which makes the lower surface (40) of the terminal board (30) accessible.

8. A refrigerant compressor in accordance with any of the preceding Claims, **characterised in that** there is provided a support wall (56) which adjoins the terminal board (30) and runs transversely relative to the terminal board (30) and transversely relative to the base (32) of the terminal box (20).

9. A refrigerant compressor in accordance with Claim 8, **characterised in that** the support wall (56) is arranged at one side of the terminal board (30).

10. A refrigerant compressor in accordance with any of the preceding Claims, **characterised in that** the terminal board is formed in such a way that leads (42, 44) on the upper surface (39) thereof and the lower surface (40) thereof are connectable to connecting terminals of the terminal board.

11. A refrigerant compressor in accordance with Claim 10, **characterised in that** the terminal board (30) is provided with connecting terminals (34, 36, 38) which are passed through the terminal board (30).

12. A refrigerant compressor in accordance with Claim 11, **characterised in that** the terminal board (30) is provided with screw-type connecting terminals (34, 36, 38).

13. A refrigerant compressor in accordance with any of the preceding Claims, **characterised in that** the terminal board (30) is provided with path extending elements (46, 48, 50) between individual mutually neighbouring connecting terminals (34, 36, 38).

14. A refrigerant compressor in accordance with Claim 13, **characterised in that** the path extending elements (46, 48, 50) are in the form of elements that are formed in one piece on the terminal board (30).

15. A refrigerant compressor in accordance with any of the preceding Claims, **characterised in that** the terminal box (20) is provided with a terminal strip (80) which is formed in one piece therewith.

16. A refrigerant compressor in accordance with any of the preceding Claims, **characterised in that** the seal (98) is formed by a sealing mass inserted into a groove (96) in the base (32) of the terminal box (20).

## Revendications

1. Compresseur frigorifique comprenant un carter de compresseur (12) dans lequel sont disposés une unité (14) comprimant le fluide frigorigène et un moteur électrique entraînant cette unité, ainsi qu'une boîte de connexions logée sur le carter de compresseur (12), où la boîte de connexions (20) présente un bornier (30) moulé d'un seul tenant sur cette boîte de connexions et disposé dans un espace intérieur (70) de cette même boîte de connexions, et où
un fond (32) de la boîte de connexions (20) présente un joint (98) solidement relié à la boîte de connexions (20) et disposé de manière circulaire autour au moins d'un passage (72, 100) situé dans le fond (32), lequel joint forme une fermeture étanche entre le fond (32) et le carter de compresseur (12).

2. Compresseur frigorifique selon la revendication 1, **caractérisé en ce que** le bornier (30) s'étend dans une zone centrale de la boîte de connexions (20), entre deux parois latérales (26a, b).

3. Compresseur frigorifique selon la revendication 2, **caractérisé en ce que** le bornier (30) s'étend entre des parois latérales longitudinales (26a, b) et parallèlement à des parois latérales transversales (28a, b).

4. Compresseur frigorifique selon l'une quelconque des revendications précédentes, **caractérisé en ce que** le bornier (30) est disposé à distance au-dessus d'un fond (32) de la boîte de connexions (20).

5. Compresseur frigorifique selon l'une quelconque des revendications précédentes, **caractérisé en ce qu'**un fond (32) de la boîte de connexions (20) est doté d'au moins un passage (72, 100) se trouvant sur un côté du bornier (30).

6. Compresseur frigorifique selon la revendication 5, **caractérisé en ce que** la boîte de connexions (20) est dotée, des deux côtés du bornier (30), de passages (72, 102).

7. Compresseur frigorifique selon l'une quelconque des revendications précédentes, **caractérisé en ce qu'**un fond (32) de la boîte de connexions (20) est doté, dans la zone du bornier (30), d'un creux (66) rendant accessible le dessous (40) du bornier (30).

8. Compresseur frigorifique selon l'une quelconque des revendications précédentes, **caractérisé en ce qu'**il est prévu, faisant suite au bornier (30), une paroi support (56) s'étendant de façon transversale par rapport au bornier (30) et de façon transversale par rapport au fond (32) de la boîte de connexions (20).

9. Compresseur frigorifique selon la revendication 8, **caractérisé en ce que** la paroi support (56) est disposée sur un côté du bornier (30).

10. Compresseur frigorifique selon l'une quelconque des revendications précédentes, **caractérisé en ce que** le bornier est conçu de manière telle, que des câbles (42, 44) placés sur le dessus (39) et sur le dessous (40) du bornier puissent se connecter à des bornes de raccordement du bornier.

11. Compresseur frigorifique selon la revendication 10, **caractérisé en ce que** le bornier (30) est doté de bornes de raccordement (34, 36, 38) qui passent dans le bornier (30).

12. Compresseur frigorifique selon la revendication 11, **caractérisé en ce que** le bornier (30) est doté de bornes de raccordement (34, 36, 38) pouvant être vissées.

13. Compresseur frigorifique selon l'une quelconque des revendications précédentes, **caractérisé en ce que** le bornier (30) est doté d'éléments se prolongeant (46, 48, 50) entre différentes bornes de raccordement (34, 36, 38) voisines les unes des autres.

14. Compresseur frigorifique selon la revendication 13, **caractérisé en ce que** les éléments se prolongeant (46, 48, 50) sont conçus comme des éléments moulés sur le bornier (30), en formant une seule et même pièce.

15. Compresseur frigorifique selon l'une quelconque des revendications précédentes, **caractérisé en ce que** la boîte de connexions (20) est dotée d'une barrette de connexions (80) moulée dans cette boîte de connexions, en formant une seule et même pièce.

16. Compresseur frigorifique selon l'une quelconque des revendications précédentes, **caractérisé en ce que** le joint (98) est formé par un mastic d'étanchéité introduit dans une rainure (96) située dans le fond (32) de la boîte de connexions (20).
